# EUROPEAN PATENT SPECIFICATION

(11) **EP 2 826 375 B1**
(45) Date of publication and mention of the grant of the patent: **02.12.2015**
(21) Application number: 13425103.2
(22) Date of filing: 19.07.2013
(51) Int. Cl.: A21D 13/00

(54) **A process for producing crustless sandwich bread**
Verfahren zur Herstellung eines krustenloses Sandwiches
Procédé de fabrication d'un sandwich sans croûte

(43) Date of publication of application: 21.01.2015
(73) Proprietor: Barilla G. e R. Fratelli S.p.A., 43100 Parma (IT)
(72) Inventor: Maucotel, Thierry, 44000 Nantes (FR); Maloberti, Paolo, I-20064 Gorgonzola (Milano) (IT); Christofidis, Nicholas, I-43058 Sorbolo (Parma) (IT); Buttini, Roberto, I-43123 Parma (IT)
(74) Representative: Ferreccio, Rinaldo

(56) References cited:
- EP-A1- 1 586 428
- EP-A1- 1 946 640
- JP-A- 2012 165 688
- US-A- 2 087 912
- US-A1- 2004 156 966
- US-A1- 2009 291 165

## Description

### Field of application

The present invention relates to the technical sector of the food industry and concerns, in particular, a process for producing crustless sandwich bread.

### Prior Art

Processes for producing sandwich bread with a crust, from which slices of crustless bread are then obtained - said slices being packaged and sold mainly for use in the preparation of sandwiches and appetizer sandwiches - have long been known.

The process conventionally used involves the following successive steps:
- mixing and kneading the ingredients
- dividing up, pre-shaping, pre-fermenting, rolling and forming the dough
- placing in a mould
- leavening
- baking in an oven
- cooling to 15-45°C
- removing the bread from the mould and mechanical removal of the crust
- slicing and packaging

Oven-baking is generally performed at a temperature of about 200°C-260°C for a time period of 30-38 minutes in a conventional oven.

"Conventional oven" is understood as meaning an oven in which baking is performed by means of transmission of heat to the food by means of conduction and/or thermal radiation and/or convection, for example inside a tunnel oven. The heat may be produced by means of combustion, typically of a fuel gas, or by means of electrical resistances.

The crust may be removed in different ways and for example using the process described in patent EP 2 138 285 B1 in the name of the Applicant.

However, all the processes of the prior art involve the production of a quantity of waste, consisting of the crust, which is anything but negligible and which may be usefully disposed of solely as an additive for animal fodder.

The crust removed from the sandwich bread corresponds to about 48% of the weight of the bread as upon removal from the oven, this corresponding to a quantity of waste equal to about 92.5% with respect to the weight of the finished product. It is therefore a quantity which is anything but negligible and which significantly affects the production costs.

The need to reduce this production waste is particularly felt in those industries which produce crustless sandwich bread and various technical solutions have been proposed in the prior art in an attempt to satisfy this need.

One of these solutions involves performing the baking of the sandwich bread in a microwave oven instead of in a conventional oven. Patent application US 2009/0291165 involves in fact performing the baking of the preformed dough, which has been placed in trays made of polyester resistant to high temperatures, inside a microwave oven. The bread which is obtained has an external surface with an appearance similar to the crumb and the slices obtained from this bread can be rolled up without breaking.

However, the white-crust bread produced by means of baking in a microwave oven exhibits organoleptic-structural characteristics which are different from that baked in a traditional oven and, in tests on consumers carried out by specialized external agencies commissioned by the Applicant, the commercially available crustless bread loaves produced by means of baking in a microwave oven achieved scores in terms of consumer acceptance which were significantly lower compared to crustless bread loaves produced in the conventional manner.

Application EP 2 327 308 also involves performing the baking of the sandwich bread in a microwave oven, followed by a baking step in a conventional oven.

Patent US 771,796 describes the production of a crustless sandwich bread by means of a fermentation step of the dough in a low-pressure environment containing steam and a subsequent baking step in a steam oven. The bread obtained has a thin white film on the surface which has the same appearance as the crumb. Also in this case the organoleptic properties and the texture of the sandwich bread obtained are considerably different from those of sandwich bread produced in the conventional manner.

Patent application JP 2012165688 describes a method for producing crustless bread, which comprises the steps of placing a sheet around the preformed dough deposited in a mould, baking at 130-160°C for 30 minutes and, at the end of baking, removing the sheet with the crust attached to it. This latter operation is technically complex and costly and relatively incompatible with the requirements of a large-scale industrial process.

### Summary of the invention

The problem underlying the present invention consists in providing a process for producing crustless bread, which enables a reduction in the production waste associated with removal of the crust, but which at the same time results in a product which is entirely comparable, in terms of texture and chemical/physical and in particular organoleptic properties, to the crustless bread currently commercially available and produced by means of baking in a conventional oven.

As seen above with reference to the processes of the prior art, it is not possible to consider using baking methods other than that which uses normal conduction/convection/heat radiation ovens, because the results obtained by applying microwave cooking and steam cooking did not satisfy expectations.

The technical problem explained above has therefore been solved by providing a process for producing crustless sandwich bread, which comprises the steps of:
- preparing a dough for sandwich bread;
- forming semifinished products of said dough and depositing them in moulds;
- oven-baking said semifinished products, obtaining corresponding loaves of sandwich bread;
- cooling the loaves of sandwich bread and removing the crust from all the sides thereof;
characterized in that the oven-baking step is performed in an oven at a temperature of 145-175°C for a time period comprised between 50 and 70 minutes.

The aforementioned oven is an oven in which baking is performed by means of transmission of heat to the food by means of conduction and/or heat radiation and/or convection, for example inside a tunnel oven. Heat may be produced by means of combustion, typically of a fuel gas, or by means of electrical resistances.

Preferably the baking is performed by means of transmission of heat to the food by means of conduction, heat radiation and convection.

Preferably the oven-baking step is performed at a temperature of 155-165°C.

The baking time varies preferably from 55 to 65 minutes.

The crustless sandwich bread obtained with the process according to the present invention exhibits a crust which is thinner and lighter in colour than that obtained with the conventional process which, as mentioned earlier, involves baking in an oven at a temperature of 200°C-260°C for a time period of 30-38 minutes.

This has enabled production waste to be reduced since the removed crust now constitutes about 40% by weight with respect to the weight of the oven-baked bread, while with the previous process the removed crust constituted about 48% by weight with respect to the weight of the oven-baked bread.

A reduction by 8% in the production waste must be regarded as very significant from an industrial point of view because it corresponds to a considerable amount of raw material saved per daily production output of the order of tonnes and this results in advantages in terms of environmental sustainability as well as economic advantages.

Significantly, this reduction in production waste is achieved while maintaining substantially unvaried both the organoleptic and textural properties of the end product, as shown by tests carried out on a wide range of consumers, and the chemical/physical properties, as confirmed by in-depth series of comparative analyses.

The reduction in production waste is achieved not only owing to the reduction in thickness of the crust, but also as a result of the fact that, thanks to the protracted oven-baking step performed at a temperature lower than that used in the conventional process, the crust - and the entire area close thereto - is less dense and less heavy.

In fact, the percentage production waste of the processes currently used is negatively influenced by the fact that, during the baking process, the very sudden extraction of vapour from the bread results in a nonuniform distribution of the density of the mass in the cross-section of the bread, since the density is greater towards the outer surface (from which the crust is removed) than in the centre of the bread.

Owing to the more delicate oven-baking process according to the present invention it is possible reduce the amount of waste, since, by reducing the oven temperature and increasing the baking time, a more uniform density of the mass in the bread cross-section and smaller thickness of the crust is obtained, without a reduction in the productivity.

### Brief description of the drawings

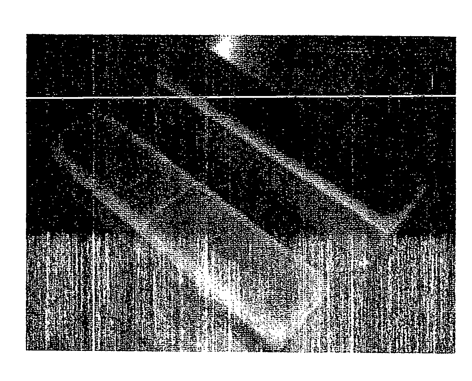

Figure 1 is a photograph which shows, at the bottom and on the left, a sandwich bread obtained according to the process of the present invention, before removal of the crust and, at the top and on the right, a sandwich bread obtained according to a conventional process, before removal of the crust.

### Detailed description

The present invention will be further described with reference to an embodiment example provided hereinbelow for illustrative and non limitative purposes.

According to this embodiment example a dough for sandwich bread is prepared using soft wheat flour, water, non-hydrogenated vegetable fats, sugar, salt, natural yeast and emulsifiers.

Semifinished products are obtained from the dough and are deposited in dedicated moulds and then conveyed to a leavening step at 38°C for 2 hours before being introduced into the baking oven.

The latter is a tunnel oven provided with a mesh conveyor belt and heat exchangers which are arranged both above and below the conveyor surface and which release by means of conduction and heat radiation the thermal energy which they in turn have received from the hot gases generated by a methane burner. In the oven are also arranged fans which enable transmission of the heat also by means of convection.

The feeding speed of the conveyor is adjusted so as to achieve a holding time of the moulds in the tunnel oven of about 60 minutes at an average temperature of 160°C.

The bread leaving the oven is cooled in an environment with a relative humidity of 45-55% at a temperature of 21°C and then conveyed to the step of removal of the crust which is performed using the methods illustrated in patent EP 2 138 285 B1.

From the photograph of Fig. 1 it can be seen that the bread at the bottom and on the left, obtained by means of the process described above, has a very light-coloured crust.

The quantity of crust removed was equal to about 40% by weight with respect to the total weight of the oven-baked bread.

### Comparison example:

For comparison purposes a sandwich bread was prepared according to a conventional process using the same sandwich bread dough and the same moulds and the same oven, but cooking the bread at the conventional temperature and baking time conditions, namely 240°C for 35 minutes. The baking time of 35 minutes was obtained by means of suitable adjustment of the conveyor speed.

The steps of cooling the bread leaving the oven and removing the crust were performed in exactly the same manner indicated further above.

From the photograph of Fig. 1 it can be seen that the bread at the top and on the right, obtained by means of the conventional process described above, has a very dark-coloured crust.

The quantity of crust removed in this case is equal to 48% by weight with respect to the total weight of the oven-baked bread.

As mentioned with reference to the prior art, the loaves of crustless sandwich bread obtained using processes other than the conventional one described further above, for example by mean of microwave or steam cooking, did not meet with consumer acceptance.

In order to establish the degree of acceptance of the crustless sandwich bread obtained by means of the process according to the present invention a blind, quantitative, product assessment test was carried out on a panel of 250 consumers, against a conventional crustless sandwich bread. The 250 consumers in question were regular users of the product and of the brand obtained with the conventional process, which constituted an extremely difficult comparison test for the new process.

The loaves of crustless sandwich bread produced according to the embodiment example and comparison example described above were used for this comparison.

The consumers were asked to give a score ranging from 1 to 9, where 1 indicates complete dislike for the product while 9 indicates maximum liking, with regard to the bread in plain form, toasted bread, bread spread with a sauce, and bread prepared in the form of a sandwich, as well as an overall acceptance score.

The results obtained are summarised in the table below:

| Bread | Toasted | Toasted | Spread | Spread | Sandwich | Sandwich | Overall acceptance | Oversell acceptance |
|---|---|---|---|---|---|---|---|---|
| | Score | % 7-9 | Score | % 7-9 | Score | % 7-9 | Score | % 7-9 |
| Example according to the invention | 7.7 | 87 | 7.5 | 84 | 7.3 | 84% | 7.4 | 84 |
| Comparison example | 7.7 | 88 | 7.5 | 83 | 7.7 | 90 | 7.4 | 81 |

By comparison with the databases developed by the external agency who conducted the test, a score ≥ 7.5 indicates an excellent product; a score between 7.0 and 7.4 indicates a good product and a score ≤ 6.9 indicates a poorly-liked product.

The heading "% 7-9" indicates the percentages of consumers who gave a score of between 7 and 9.

As can be seen from the table above, the acceptance expressed by the consumers with regard to the crustless sandwich bread obtained by means of the process according to the present invention is substantially the same as that expressed with regard to the crustless sandwich bread obtained by means of the conventional process.

The density of the sandwich bread produced according to the example of the invention was measured in comparison with that of the sandwich bread produced according to the comparison example and it was found that the former had a lower density in the crust and a higher density in the central part, i.e. had a greater weight in the centre and lower weight on the periphery (the test results recorded indicate a difference in the order of more than 10% between the bread obtained with the process according to the example of the invention and that obtained according to the comparison example, for the same operating conditions).

Other chemical/physical parameters, such as humidity, water activity, texture, state of the starch (DSC thermal analysis) and internal cell characteristics (size and shape as determined by image analysis) were also measured, resulting in entirely the same results for the sandwich bread obtained by means of the process according to the example of the invention and that obtained in the comparison example.

Below, the details of the chemical/physical analyses used to corroborate the characterisation of the invention are shown:
Humidity of the product, measured using the official protocol: both the crustless bread obtained with the known process and that obtained with the novel technique had the same water content, i.e. 37.5%.

Water activity of the product, measured using the conventional technique (equipment: LabMaster aw, Novasina, Switzerland): both the crustless bread obtained by means of the process according to the example of the invention and that obtained in the comparison example had a water activity value of 0.91.

Degree of retrogradation of the starch measured by means of melting enthalpy of amylopectin crystallites performed by means of differential scanning calorimetry (equipment: DSC 820, Mettler Toledo, Switzerland): the crustless bread obtained by means of the process according to the example of the invention and that obtained in the comparison example had values which did not differ significantly, i.e. 0.50 J/g (amylopectin).

Texture analysis (hardness and elasticity), performed with a dynamometer (equipment: TATX2 of SMS, UK) using the Texture Profile Analysis protocol (M. Bourne, Food Texture and Viscosity, 2nd edition, Academic Press): the crustless bread obtained by means of the process according to the example of the invention and that obtained in the comparison example had values which did not differ significantly, i.e. 2.8 N for the hardness and 0.30 for the elasticity.

Characterization of the sizes and shape of the cells by means of image analysis: an image analysis (software Image Pro Plus, Media Cybernetics, USA) was carried out on images of different slices of samples of crustless bread obtained by means of the process according to the example of the invention and that obtained according to the process of the comparison example, acquired in high resolution by means of an optical scanner and suitably processed (black/white conversion, increase in contrast, correction of the dynamic range and construction of a mask on the cells), in order to obtain the following cell measurements: area, average diameter, maximum diameter, minimum diameter, perimeter, roundness and fractal dimension. All these parameters were assessed as a whole by means of the multivariate statistical analysis technique PCA (principle components analysis) using suitable software (SIMCA, Umetrics, Sweden). The result of the PCA shows that the two samples are not statistically different, thus indicating that there are no differences in the cell structure of the crustless bread obtained with the process according to the present invention and that obtained with the known process.

As seen above, in the embodiment example of the process according to the present invention, the holding time of the moulds in the oven is longer (60 minutes) than that of the comparison example (35 minutes). In order to maintain the same productivity it is possible to envisage using a tunnel oven that is longer than that used in the known comparison process. In the specific case an oven with a 51-metre long tunnel was used instead of the oven used previously, which had a 31-metre long tunnel.

## Claims

1. Process for producing crustless sandwich bread, which comprises the steps of:
- preparing a dough for sandwich bread;
- forming semifinished products of said dough and depositing them in moulds;
- oven-baking said semifinished products, obtaining corresponding loaves of sandwich bread;
- cooling the loaves of sandwich bread and removing the crust from all the sides thereof;
**characterized in that** the oven-baking step is performed in an oven at a temperature of 145-175°C for a time period comprised between 50 and 70 minutes.

2. Process according to claim 1, wherein, in said oven, baking is performed by means of transmission of heat to the food by means of conduction and/or heat radiation and/or convection.

3. Process according to claim 2, wherein baking is performed by means of transmission of heat to the food by means of conduction, heat radiation and convection.

4. Process according to any one of claims 1-3, wherein said oven is a tunnel oven.

5. Process according to any one of claims 1 to 4, wherein said oven-baking step is performed at a temperature of 155-165°C.

6. Process according to any one of claims 1 to 5, wherein the baking time varies from 55 to 65 minutes.

7. Process according to any one of claims 1 to 4, wherein said oven-baking step is performed at a temperature of about 160°C for 60 minutes.

## Patentansprüche

1. Verfahren zur Herstellung eines krustenlosen Sandwichbrotes, wobei das Verfahren die folgenden Schritte umfasst:
- Zubereiten eines Teigs für Sandwichbrot;
- Formen von halbfertigen Produkten aus dem Teig und Anordnen dieser in Formen;
- Backen der halbfertigen Produkte im Ofen, um entsprechende Sandwichbrotlaibe zu erhalten;
- Kühlen der Sandwichbrotlaibe und Entfernen der Kruste von allen Seiten der Laibe;
**dadurch gekennzeichnet, dass** der Schritt des Backens im Ofen in einem Ofen bei einer Temperatur von 145-175°C für einen Zeitraum von 50 bis 70 Minuten durchgeführt wird.

2. Verfahren nach Anspruch 1, wobei in dem Ofen das Backen mittels Wärmeübertragung auf das Lebensmittel mittels Leitung und/oder Wärmestrahlung und/oder Wärmekonvektion durchgeführt wird.

3. Verfahren nach Anspruch 2, wobei das Backen mittels Übertragung von Wärme an das Lebensmittel mittels Leitung, Wärmestrahlung und Konvektion durchgeführt wird.

4. Verfahren nach einem der Ansprüche 1 bis 3, wobei der Ofen ein Tunnelofen ist.

5. Verfahren nach einem der Ansprüche 1 bis 4, wobei der Schritt des Backens im Ofen bei einer Temperatur von 155 bis 165°C durchgeführt wird.

6. Verfahren nach einem der Ansprüche 1 bis 5, wobei die Backzeit von 55 bis 65 Minuten variiert.

7. Verfahren nach einem der Ansprüche 1 bis 4, wobei der Schritt des Backens im Ofen 60 Minuten lang bei einer Temperatur von etwa 160°C durchgeführt wird.

## Revendications

1. Procédé destiné à produire du pain à sandwich sans croûte, qui comprend les étapes consistant à :
- préparer une pâte de pain à sandwich ;
- former des produits semi-finis de ladite pâte et les déposer dans des moules ;
- cuire au four lesdits produits semi-finis, en obtenant des miches correspondantes de pain à sandwich ;
- refroidir les miches de pain à sandwich et retirer la croûte de tous les côtés de celles-ci ;
**caractérisé en ce que** l'étape de cuisson au four est exécutée dans un four à une température comprise entre 145 °C et 175 °C pendant une période de temps comprise entre 50 minutes et 70 minutes.

2. Procédé selon la revendication 1, dans lequel, dans ledit four, la cuisson est exécutée au moyen d'une transmission de chaleur à la nourriture au moyen d'une conduction et / ou d'un rayonnement thermique et / ou d'une convection.

3. Procédé selon la revendication 2, dans lequel la cuisson est exécutée au moyen d'une transmission de chaleur à la nourriture au moyen d'une conduction, d'un rayonnement thermique et d'une convection.

4. Procédé selon l'une quelconque des revendications 1 à 3, dans lequel ledit four est un four tunnel.

5. Procédé selon l'une quelconque des revendications 1 à 4, dans lequel ladite étape de cuisson au four est exécutée à une température comprise entre 155 °C et 165 °C.

6. Procédé selon l'une quelconque des revendications 1 à 5, dans lequel le temps de cuisson varie entre 55 minutes et 65 minutes.

7. Procédé selon l'une quelconque des revendications 1 à 4, dans lequel ladite étape de cuisson au four est exécutée à une température approximativement égale à 160 °C pendant 60 minutes.
